# EUROPEAN PATENT SPECIFICATION

(11) **EP 1 281 234 B1**
(45) Date of publication and mention of the grant of the patent: **12.10.2005**
(21) Application number: 01926258.3
(22) Date of filing: 09.04.2001
(51) Int. Cl.: H02M 7/12, G05F 1/56

(54) **APPLIANCE POWER SUPPLY**
STROMVERSORGUNG FÜR EIN HAUSGERÄT
ALIMENTATION ELECTRIQUE POUR APPAREILS

(30) Priority: 10.04.2000 NZ 50386600
(43) Date of publication of application: 05.02.2003
(73) Proprietor: Fisher & Paykel Appliances Limited, Auckland (NZ)
(72) Inventor: TODD, Robert William, Dunedin (NZ); BUTLER, Richard, George, Arthur, Dunedin (NZ)
(74) Representative: Brown, John D.
(86) International application number: PCT/NZ2001/000056
(87) International publication number: WO 2001/078224

(56) References cited:
- EP-A- 0 130 411
- WO-A1-81/03246
- WO-A1-99/54991
- DE-A- 3 441 695
- US-A- 4 821 166
- PATENT ABSTRACTS OF JAPAN vol. 0170, no. 71 (E-1319), 12 February 1993 (1993-02-12) & JP 4 275065 A (MATSUSHITA ELECTRIC IND CO LTD), 30 September 1992 (1992-09-30)
- PATENT ABSTRACTS OF JAPAN vol. 1995, no. 04, 31 May 1995 (1995-05-31) & JP 7 007926 A (MATSUSHITA ELECTRIC IND CO LTD), 10 January 1995 (1995-01-10)
- PATENT ABSTRACTS OF JAPAN vol. 1998, no. 11, 30 September 1998 (1998-09-30) & JP 10 150765 A (JAPAN AVIATION ELECTRON IND LTD), 2 June 1998 (1998-06-02)
- PATENT ABSTRACTS OF JAPAN vol. 1998, no. 01, 30 January 1998 (1998-01-30) & JP 9 238466 A (TOSHIBA LIGHTING & TECHNOL CORP), 9 September 1997 (1997-09-09)
- PATENT ABSTRACTS OF JAPAN vol. 0133, no. 83 (E-811), 24 August 1989 (1989-08-24) & JP 1 133566 A (MITSUBISHI ELECTRIC CORP), 25 May 1989 (1989-05-25)
- PATENT ABSTRACTS OF JAPAN vol. 0143, no. 20 (E-0950), 10 July 1990 (1990-07-10) & JP 2 106174 A (NEC CORP; others: 01), 18 April 1990 (1990-04-18)
- PATENT ABSTRACTS OF JAPAN vol. 1998, no. 14, 31 December 1998 (1998-12-31) & JP 10 243654 A (OMRON CORP), 11 September 1998 (1998-09-11)
- PATENT ABSTRACTS OF JAPAN vol. 0162, no. 79 (E-1220), 22 June 1992 (1992-06-22) & JP 4 067779 A (MATSUSHITA ELECTRIC IND CO LTD), 3 March 1992 (1992-03-03)
- PATENT ABSTRACTS OF JAPAN vol. 0173, no. 71 (E-1396), 13 July 1993 (1993-07-13) & JP 5 056631 A (MITSUBISHI ELECTRIC CORP), 5 March 1993 (1993-03-05)
- PATENT ABSTRACTS OF JAPAN vol. 0173, no. 07 (E-1379), 11 June 1993 (1993-06-11) & JP 5 022853 A (FUJITSU DENSO LTD), 29 January 1993 (1993-01-29)
- PATENT ABSTRACTS OF JAPAN vol. 0173, no. 19 (E-1383), 17 June 1993 (1993-06-17) & JP 5 030649 A (HITACHI SHONAN DENSHI CO LTD), 5 February 1993 (1993-02-05)
- PATENT ABSTRACTS OF JAPAN vol. 1995, no. 07, 31 August 1995 (1995-08-31) & JP 7 107664 A (PFU LTD), 21 April 1995 (1995-04-21)
- PATENT ABSTRACTS OF JAPAN & JP 09 084 694 A (SANYO ELECTRIC CO LTD, TOTTORI SANYO ELECTRIC CO LTD) 31 March 1997
- PATENT ABSTRACTS OF JAPAN & JP 11 098 830 A (OOHIRA DENSHI KK) 09 April 1999
- MARKUS J.: 'Modern electronic circuits reference manual', 1980, MCGRAW-HILL BOOK COMPANY page 742, XP002977388 ISBN 0-07-040446-1

## Description

### TECHNICAL FIELD

This invention relates to DC power supplies and in particular, but not solely, power supplies for whiteware appliances.

### BACKGROUND ART

Modem whiteware appliances commonly use switched mode power supplies to supply power to motors, solenoids and control electronics. Such power supplies consume power even when on standby (a condition which the user considers as being switched off). Further, switched mode power supplies require the use of relatively expensive components such as inductors and capacitors having a high working voltage. In such whiteware appliances it is common to control motor torque and speed using pulse width modulation (PWM) techniques to control current supplied to the motor windings. Such PWM circuits also require relatively expensive components.

JP04275065A discloses a transformerless AC to DC power supply in which the input AC voltage is first full-wave rectified and then a control circuit switches required portions of the resultant pulse train to a reservoir capacitor based upon a generated reference voltage.

It is an object of the present invention to provide a power supply which goes at least some way towards overcoming the abovementioned disadvantages.

### DISCLOSURE OF INVENTION

Accordingly the invention consists in a variably controlled output voltage transformerless DC power supply including:
a rectifier means, which receives AC from a mains supply,
a reservoir capacitor which in use provides the DC output of said power supply,
a semiconductor switching device in series with said reservoir capacitor which controls current flow from the output of said rectifier means to said reservoir capacitor, and
means for variably controlling the conduction angle of said switching device to vary the DC voltage across said reservoir capacitor to a desired value,
characterised in that the power supply has an ON mode and a standby mode, and
a voltage dropping resistor is connected in series with said rectifier means which when said supply is in the ON mode reduces the peak unidirectional voltage provided from the rectifier means to a level compatible with the maximum DC output voltage of said supply,

In a further aspect the invention consists in a washing appliance having a motor and a water heating element, said motor being powered by a DC power supply having an ON mode and a standby mode and comprising:
a rectifier means, which receives AC from a mains supply,
a reservoir capacitor which in use provides DC to said motor,
a semiconductor switching device in series with said reservoir capacitor which controls current flow from the output of said rectifier means to said reservoir capacitor,
said heating element connected in series with said rectifier means which when said supply is in the ON mode reduces the peak unidirectional voltage provided from the rectifier means to a level compatible with the maximum DC output voltage of said supply,
and means for variably controlling the conduction angle of said switching device to vary the DC voltage across said reservoir capacitor to a desired value.

### BRIEF DESCRIPTION OF THE DRAWINGS

Preferred forms of the invention will be described with reference to the accompanying drawings in which:
Figure 1 is a circuit diagram of a dc power supply particularly suited to whiteware appliances such as dishwashers, and
Figure 2 is a waveform diagram of current through a semiconductor device in the power supply.

### BEST MODES FOR CARRYING OUT THE INVENTION

The power supply of the present invention is particularly suited for use in whiteware appliances having built-in heater elements such as dishwashers and washing machines and such an embodiment will now be described.

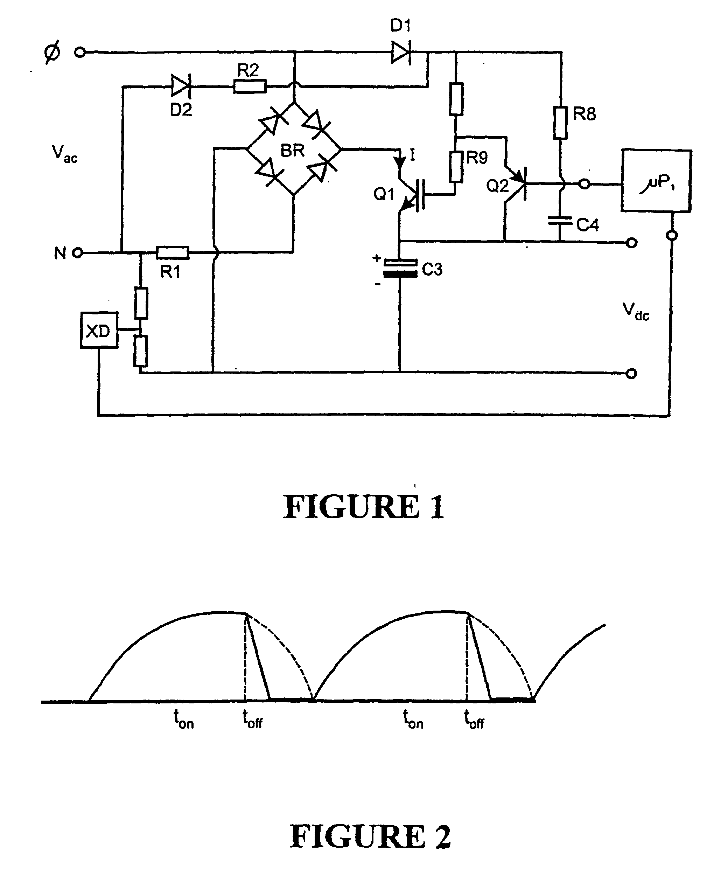

A simplified circuit diagram of the power supply of the present invention is shown in Figure 1. This power supply is a transformerless design which uses a high power voltage dropping resistor R1 and phase control of mains halfwaves to provide a variable voltage direct current rail having a voltage V_{dc} which can be varied under microprocessor control in the range 30 volts to 85 volts. Typically the variable voltage output would be used to control an appliance motor and voltage dropping resistor R1, which dissipates significant power, would form the water heating element.

The use of a power dissipating voltage dropping resistor, such as R1 in the present invention, would for many power supply applications be considered unacceptable, but for home appliances incorporating water heating the power dissipated from such a resistor can be put to good use as a water heating element. Thus in such applications this normally disadvantageous circuit feature can be converted to an advantage.

Referring to Figure 1 the AC mains supply voltage V_{ac}, which may be 230/240 volts or 110 volts, is fed to a full wave bridge rectifier BR via a voltage dropping resistor in R1 in series with the neutral conductor. Bearing in mind the maximum DC voltage to be supplied by the power supply is typically 85 volts the value of R1 must differ depending on the nominal mains voltage. For a 50 Hz 230 volt mains supply and an output of 85 volts with the maximum current of 1 amp the value of R1 is 129 ohms. For a 110 volt 60 Hz supply the value of R1 is 29 ohms.

A large value reservoir capacitor C3 is charged from bridge rectifier BR to provide the variable voltage DC power. The value of the output voltage is determined by phase switching of transistor Q₁ which is an insulated gate bipolar transistor (IGBT). The conduction angle of Q₁ is controlled by a microprocessor µP₁ for the purpose of determining appliance motor torque at various stages of a wash cycle. Conduction angle control of Q₁ is indicated by the waveform diagram in Figure 2 which shows collector current I. The value of conduction angle tₒₙ is increased or decreased to in turn increase or decrease the output voltage V_{dc}.

It has been determined that a suitable value for reservoir capacitor C3 is 1000 µF. This will give a ripple voltage of between 3 and 4 volts and the capacitor will require a ripple current rating of at least 1 amp. The use of voltage dropping resistor R1 means that the DC voltage rating of capacitor C3 can be relatively modest, namely 100 volts.

To minimise radio frequency interference during switching of Q₁ it is necessary to control the turnoff time t_{off} to reduce the rate of change of current dI/dt. For triac phase control it would be necessary to use inductances typically of the value from 2 to 5 mH. With the present power supply circuit the use of such inductances can be avoided by utilising the Miller effect. The gate resistance of IGBT Q₁ in conjunction with the Miller capacitance provides an approximately linear fall in voltage with respect to time. The gate charge of Q₁ is discharged at a rate determined by the gate voltage and the gate resistor R9.

The bias current for Q₁ must be obtained directly from the AC mains to ensure there will be sufficient voltage difference relative to the collector of Q₁ from which to derive supply during positive mains half cycles. The bias supply is a half wave supply provided by diode D1 and capacitor C4.

The bias supply for Q₁ must meet two onerous requirements. First it must ensure proper operation at both 110 and 230 volt mains supplies. Second it must ensure fast start-up on power on to ensure Q₁ does not operate in a potentially destructive linear mode. If Q₁ is either off or in a linear mode during a negative half cycle then there will be a voltage difference between the collector and gate producing a current to the bias supply via diode D2. Resistor R8 acts to isolate capacitor C4 which would otherwise prevent any instantaneous gate drive. Resistor R2 serves to protect diodes D1 and D2 during transient mains spikes which could cause reverse breakdown on either diode.

Microprocessor µP₁ which will usually be the same device that forms the appliance controller, controls the output voltage of the power supply by controlling Q₁ through transistor Q₂. The microprocessor requires time pulses so as to synchronise with the mains half cycles. A zero crossing detector circuit XD provides these timing signals.

The power supply of the present invention provides a number of advantages in applications where the power dissipated in voltage dropping resistor R1 can be put to good use. These include the absence of inductors, the avoidance of the need for a PWM circuit for motor control, low voltage rating for the reservoir capacitor, reduced radio frequency interference and reduced power consumption when the appliance is on standby. Further, the value of only one component needs to be changed as between a power supply for 110 volt mains and a power supply for 230 volt mains. This is the value of the dropping resistor which, as already explained, is implemented by the appliance water heating element.

In Figure 1 dropping resistor R1 is shown located between the mains supply and the bridge rectifier, but it may be located on the DC side of the bridge rectifier.

In conjunction with the reduction of power when on standby the present circuit has the advantage over conventional switch mode controlled power supplies in that it is unnecessary to use a separate standby power supply.

In most appliances one or more fixed voltage DC power supplies will also be required and these can be derived from the present variable voltage DC supply by the use of pulse width modulator supplies to provide voltages at values such as 5 volts and 24 volts.

## Claims

1. A variably controlled output voltage transformerless DC power supply including
a rectifier means (BR), which receives AC from a mains supply (V_{ac}),
a reservoir capacitor (C3) which in use provides the DC output of said power supply,
a semiconductor switching device (Q1) in series with said reservoir capacitor (C3) which controls current flow from the output of said rectifier means (BR) to said reservoir capacitor, and
means (µP₁) for variably controlling the conduction angle of said switching device (Q1) to vary the DC voltage across said reservoir capacitor (C3) to a desired value,
**characterised in that** the power supply has an ON mode and a standby mode, and
a high power voltage dropping resistor (R1) is connected in series with said rectifier means (BR) which when said supply is in the ON mode reduces the peak unidirectional voltage provided from the rectifier means to a level compatible with the maximum DC output voltage of said supply.

2. A power supply according to claim 1 wherein said high power voltage dropping resistor (R1) is connected in series with the input of said rectifier means (BR).

3. A power supply according to claim 1 wherein said high power voltage dropping resistor (R1) is connected in series with the output of said rectifier means (BR).

4. A power supply according to any one of the preceding claims wherein said power supply supplies power to a motor in a home appliance which uses hot water and said voltage dropping resistor (R1) is a heating element for heating said water.

5. A power supply according to claim 4 wherein said means (µP₁) for variably controlling the conduction angle of said semiconductor switching device (Q1) is a microprocessor.

6. A washing appliance having a motor and a water heating element (R1), said motor being powered by a transformerless DC power supply having an ON mode and a standby mode and comprising:
a rectifier means (BR), which receives AC from a mains supply (V_{ac}),
a reservoir capacitor (C3) which in use provides DC to said motor,
a semiconductor switching device (Q1) in series with said reservoir capacitor (C3) which controls current flow from the output of said rectifier means (BR) to said reservoir capacitor,
said heating element (R1) connected in series with said rectifier means (BR) which when said supply is in the ON mode reduces the peak unidirectional voltage provided from the rectifier means to a level compatible with the maximum DC output voltage of said supply,
and means (µP₁) for variably controlling the conduction angle of said switching device (Q1) to vary the DC voltage across said reservoir capacitor (C3) to a desired value.

7. A washing appliance according to claim 6 wherein said heating element (R1) is connected in series with the input of said rectifier means.

8. A washing appliance according to claim 6 wherein said heating element (R1) is connected in series with the output of said rectifier means.

9. A power supply or washing appliance according to any one of the preceding claims including a wash cycle controller and wherein said means (µP₁) for variably controlling the conduction angle of said semiconductor switching means is said controller.

## Patentansprüche

1. Gleichstromversorgung ohne Transformator mit variabel gesteuerter/geregelter Ausgangsspannung, umfassend:
- eine Gleichrichter-Einrichtung (BR), die Wechselstrom aus einem Stromnetz (V_{ac}) bezieht,
- einen Speicherkondensator (C3), der im Betrieb für den Gleichstromausgang der Stromversorgung sorgt,
- eine mit dem Speicherkondensator (C3) in Reihe geschaltete Halbleiter-Schaltvorrichtung (Q1), die den Stromfluss von dem Ausgang der Gleichrichter-Einrichtung (BR) zu dem Speicherkondensator steuert/regelt, und
- Mittel (µP₁) zum variablen Steuem/Regeln des Durchlasswinkels der Schaltvorrichtung (Q1), um die Gleichspannung über dem Speicherkondensator (C3) auf einen gewünschten Wert zu variieren,
**dadurch gekennzeichnet,**
- **dass** die Stromversorgung über einen AN-Modus und einen Bereitschaftsmodus verfügt und
- **dass** mit der Gleichrichter-Einrichtung (BR) ein Hochleistungs-Vorschaltwiderstand (R1) in Reihe geschaltet ist, der im AN-Modus der Stromversorgung die von der Gleichrichter-Einrichtung gelieferte einseitig gerichtete Spitzenspannung auf eine Höhe reduziert, die mit der maximalen Gleichstrom-Ausgangsspannung der Versorgung kompatibel ist.

2. Stromversorgung nach Anspruch 1, wobei der Hochleistungs-Vorschaltwiderstand (R1) mit dem Eingang der Gleichrichter-Einrichtung (BR) in Reihe geschaltet ist.

3. Stromversorgung nach Anspruch 1, wobei der Hochleistungs-Vorschaltwiderstand (R1) mit dem Ausgang der Gleichrichter-Einrichtung (BR) in Reihe geschaltet ist.

4. Stromversorgung nach einem der vorhergehenden Ansprüche, wobei die Stromversorgung Strom an einen Motor in einem Haushaltsgerät liefert, das mit Heißwasser arbeitet, und wobei der Vorschaltwiderstand (R1) ein Heizelement für die Erwärmung des Wassers ist.

5. Stromversorgung nach Anspruch 4, wobei das Mittel (µP₁) zum variablen Steuern/Regeln des Durchlasswinkels der Halbleiter-Schaltvorrichtung (Q1) ein Mikroprozessor ist.

6. Waschvorrichtung mit einem Motor und einem Wasser-Heizelement (R1), wobei der Motor von einer Gleichstromversorgung ohne Transformator betrieben wird, die über einen AN-Modus und einen Bereitschaftsmodus verfügt und die umfasst:
- eine Gleichrichter-Einrichtung (BR), die Wechselstrom aus einem Stromnetz (V_{ac}) bezieht,
- einen Speicherkondensator (C3), der im Betrieb Gleichstrom an den Motor liefert,
- eine mit dem Speicherkondensator (C3) in Reihe geschaltete Halbleiter-Schaltvorrichtung (Q1), die den Stromfluss von dem Ausgang der Gleichrichter-Einrichtung (BR) zu dem Speicherkondensator steuert/regelt,
- das mit der Gleichrichter-Einrichtung (BR) in Reihe geschaltete Heizelement (R1), das im AN-Modus der Stromversorgung die von der Gleichrichter-Einrichtung gelieferte einseitig gerichtete Spitzenspannung auf eine Höhe reduziert, die mit der maximalen Gleichstrom-Ausgangsspannung der Versorgung kompatibel ist, und
- Mittel (µP₁) zum variablen Steuern/Regeln des Durchlasswinkels der Schaltvorrichtung (Q1), um die Gleichspannung über dem Speicherkondensator (C3) auf einen gewünschten Wert zu variieren.

7. Waschvorrichtung nach Anspruch 6, wobei das Heizelement (R1) mit dem Eingang der Gleichrichter-Einrichtung in Reihe geschaltet ist.

8. Waschvorrichtung nach Anspruch 6, wobei das Heizelement (R1) mit dem Ausgang der Gleichrichter-Einrichtung in Reihe geschaltet ist.

9. Stromversorgung oder Waschvorrichtung nach einem der vorhergehenden Ansprüche, die eine Waschzyklus-Steuer-/Regeleinheit aufweist und bei der das Mittel (µP1) zum variablen Steuern/Regeln des Durchlasswinkels der Halbleiter-Schaltvorrichtung die Steuer-/Regeleinheit ist.

## Revendications

1. Alimentation électrique en CC dépourvue de transformateur et à tension de sortie contrôlée comprenant
un moyen de redresseur (BR), qui reçoit un courant alternatif de la part d'une alimentation principale (V_{ac}),
un condensateur à réservoir (C3) qui, lors de l'utilisation, fournit la sortie CC de ladite alimentation électrique,
un dispositif de commutation à semi-conducteur (Q1) placé en série avec ledit condensateur à réservoir (C3), qui contrôle le flux de courant provenant de la sortie dudit moyen de redresseur (BR), et allant vers ledit condensateur à réservoir, et
un moyen (µP₁) destiné à contrôler de manière variable l'angle de conduction dudit dispositif de commutation (Q1) afin de faire varier la tension CC au sein dudit condensateur à réservoir (C3), selon une valeur souhaitée,
**caractérisée en ce que** l'alimentation électrique possède un mode ON et un mode de veille, et une résistance de chute de tension à puissance élevée (R1) est reliée en série avec ledit moyen de redresseur (BR) qui, lorsque ladite alimentation est en mode ON, réduit la tension unidirectionnelle de crête fournie par le moyen de redresseur jusqu'à un niveau compatible avec la tension de sortie CC maximale de ladite alimentation.

2. Alimentation électrique selon la revendication 1, dans laquelle ladite résistance de chute de tension à puissance élevée (R1) est reliée en série à l'entrée dudit moyen de redresseur (BR).

3. Alimentation électrique selon la revendication 1, dans laquelle ladite résistance de chute de tension à puissance élevée (R1) est reliée en série à la sortie dudit moyen de redresseur (BR).

4. Alimentation électrique selon l'une quelconque des revendications précédentes, dans laquelle ladite alimentation électrique fournit de l'énergie à un moteur dans un appareil domestique qui utilise de l'eau chaude, et ladite résistance de chute de tension (R1) est un élément chauffant destiné à chauffer ladite eau.

5. Alimentation électrique selon la revendication 4, dans laquelle ledit moyen (µP₁) destiné à contrôler de manière variable l'angle de conduction dudit dispositif de commutation à semi-conducteur (Q1) est un microprocesseur.

6. Appareil de lavage ayant un moteur et un élément chauffant l'eau (R1), ledit moteur étant alimenté par une alimentation électrique en CC dépourvue de transformateur ayant un mode ON et un mode de veille, et comprenant :
un moyen de redresseur (BR), qui reçoit un courant alternatif de la part d'une alimentation principale (V_{ac}),
un condensateur à réservoir (C3) qui, lors de l'utilisation, fournit un courant continu audit moteur,
un dispositif de commutation à semi-conducteur (Q1) placé en série avec ledit condensateur à réservoir (C3), qui contrôle le flux de courant provenant de la sortie dudit moyen de redresseur (BR), et allant vers ledit condensateur à réservoir,
ledit élément chauffant (R1) relié en série audit moyen de redresseur (BR) qui, lorsque ladite alimentation est en mode ON, réduit la tension unidirectionnelle de crête fournie par le moyen de redresseur jusqu'à un niveau compatible avec la tension de sortie CC maximale de ladite alimentation,
et un moyen (µP₁) destiné à contrôler de manière variable l'angle de conduction dudit dispositif de commutation à semi-conducteur (Q1) afin de faire varier la tension CC au sein dudit condensateur à réservoir (C3) selon une valeur souhaitée.

7. Appareil de lavage selon la revendication 6, dans lequel ledit élément chauffant (R1) est relié en série à l'entrée dudit moyen de redresseur.

8. Appareil de lavage selon la revendication 6, dans lequel ledit élément chauffant (R1) est relié en série à la sortie dudit moyen de redresseur.

9. Alimentation électrique ou appareil de lavage selon l'une quelconque des revendications précédentes, comprenant un contrôleur de cycle de lavage, et dans lequel/laquelle ledit moyen (µP₁) destiné à contrôler de manière variable l'angle de conduction dudit dispositif de commutation à semi-conducteur est ledit contrôleur.
